## Europäisches Patentamt
## European Patent Office
## Office européen des brevets

(19)

(11) Publication number: **0 109 648**
**B1**

(12) **EUROPEAN PATENT SPECIFICATION**

(45) Date of publication of patent specification: **01.02.89**

(51) Int. Cl.⁴: **G 02 B 6/38**

(21) Application number: **83111430.1**

(22) Date of filing: **15.11.83**

(54) **Flat type plastic connector means for splicing a plurality of optical fibres.**

(43) Date of publication of application:
**30.05.84 Bulletin 84/22**

(45) Publication of the grant of the patent:
**01.02.89 Bulletin 89/05**

(84) Designated Contracting States:
**DE FR GB**

(56) References cited: ·
GB-A-1 600 028
GB-A-2 093 755
JP-A-56 066 813
US-A-3 668 177
US-A-3 846 223
US-A-4 029 390
US-A-4 265 514

PATENTS ABSTRACTS OF JAPAN, volume 2,
no. 150, December 15, 1978, page 9651E78 & JP
- A - 53-119059 (FURUKAWA DENKI KOGYO
K.K.) 18-10-1978
"Design Engineering" Jan. 76, p. 13

(73) Proprietor: **HITACHI, LTD.**
6, Kanda Surugadai 4-chome Chiyoda-ku
Tokyo (JP)

(72) Inventor: **Sato, Hidemi**
1481-5, Kamiyabecho Totsuka-ku
Yokohama (JP)
Inventor: **Kaneda, Aizo**
2456-47, Kamiyabecho Totsuka-ku
Yokohama (JP)
Inventor: **Yokono, Hitoshi**
8-5, Chuocho
Katsuta-shi (JP)
Inventor: **Suzuki, Kiichi**
3, Negishimachi-2-chome
Yokosuka-shi (JP)

(74) Representative: **Altenburg, Udo, Dipl.-Phys.**
**et al**
Patent- und Rechtsanwälte Bardehle-
Pagenberg-Dost-Altenburg & Partner Postfach
86 06 20
D-8000 München 86 (DE)

## Description

### FIELD OF THE INVENTION

The present invention relates to a method of injection molding a flat type plastic connector means for splicing a plurality of exposed optical fibres.

### DESCRIPTION OF THE PRIOR ART

Optical fibres are replacing metal wire cables, since they are compact and lightweight as well as free from any high-level electromagnetic interference and versatile. However, similarly to metal wire cables, an operation for splicing optical fibres to each other in the field must be performed so that a splicing loss in a spliced portion will be sufficiently smaller than the total transmission loss in a fibre of a predetermined length.

In addition, it is required that the splicing portion on which optical fibres are connected to each other is easily formed, permanent, compact, lightweight and strong. The above mentioned requirements except for permanency, can be similarly applied to a connector for connecting a cable to a terminal device.

One widely employed splicing method uses a precision sleeve closely enclosing an outer periphery of a fibre to be connected to guide and retain the fibre at a predetermined position. This method is most suitable for a single fibre or a cable having a small number of fibres, since it is necessary to handle fibres one by one.

In the case of a large number of optical fibres, it is a practical method that fibres are retained and connected to each other by means of a metal or glass base having a plurality of grooves of V-shaped cross-section formed on a surface thereof. According to this method, an optical fibre constituted by a core and a cladding is retained in each groove by a cover to form a connector. An axial end of the connector is to be ground. Optical fibres are connected to each other by abutting the ground ends of a pair of connectors. In this case, the V-grooves are required to be machined with a high accuracy to ensure alignment of the optical axes of the optical fibres to be connected. Therefore, a considerable amount of time is required for cutting such grooves and it is difficult to effect mass production.

On the other hand, it is also known to employ a silicon crystal base having a plurality of grooves of trapezoidal cross-section formed on a surface thereof by etching, instead of the cutting of a metal base. In this case, the dimensional accuracy of the cross-sectional configuration of the etched grooves is remarkably high, for example, ± 1 μm. However, such a base is costly and brittle. Moreover, it is also known to employ a base having a plurality of grooves of V-shaped cross-section formed by plastic injection molding using a mold produced by electroforming using a silicon base as a master. By this method, however, considerable amounts of time and cost are required for production of a mold by electroforming.

The mold used in the method for manufacturing plastic connector means as known from JP—A—56—66813 has many semicircular grooves the machining of which is quite costly.

### SUMMARY OF THE INVENTION

Accordingly, it is an object of the invention to provide a manufacturing method with a low cost as well as to overcome the above-mentioned disadvantages of the prior art.

These objects are reached according to the invention by a manufacturing method as defined in the claim.

The above and other objects, features and advantages of the invention will become clear from the following description of the preferred embodiments made in connection with the accompanying drawings.

### BRIEF DESCRIPTION OF THE DRAWINGS

Fig. 1 is a perspective view of a housing half produced by the method of the invention;

Fig. 2 is a sectional view taken along the line II—II of Fig. 3, showing a connector constructed from the housing halves.

Fig. 3 is a sectional view taken along the line III—III of Fig. 2;

Fig. 4 is a schematic sectional view of an optical cable;

Fig. 5 is a perspective view of a connector housing;

Fig. 6 is a perspective view of another embodiment of a connector using housing halves produced by the method of the invention, with the upper part thereof cut away;

Fig. 7 is an enlarged schematic sectional view taken along the line VII—VII of Fig. 6;

Fig. 8 is a sectional view of still another embodiment of a connector using housing halves produced by the method of the invention;

Figs. 9 to 12 illustrating a method of formation of the housing half, in which Figs. 9 to 11 are sectional views taken along the lines IX—IX and XI—XI of Fig. 10, respectively;

Fig. 13 is a perspective view of a further embodiment of a connector using housing halves produced by the method of the invention; and

Figs. 14 and 15 are sectional views taken along the lines XIV—XIV and XV—XV of Fig. 13, respectively.

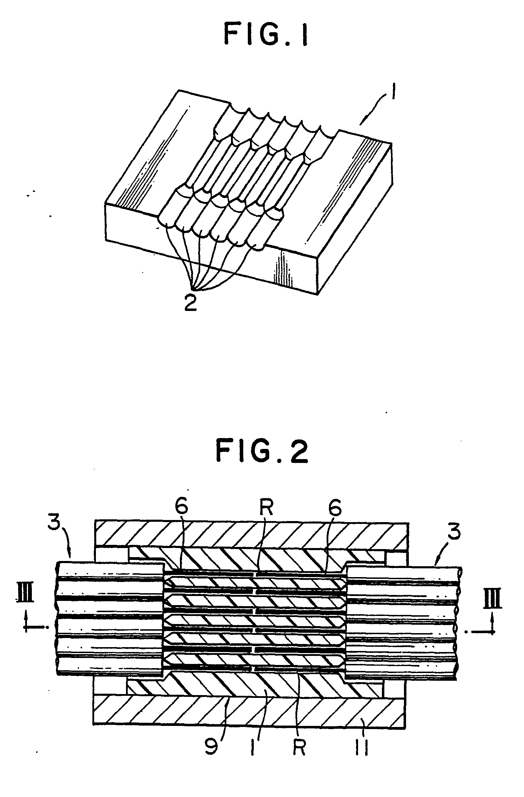

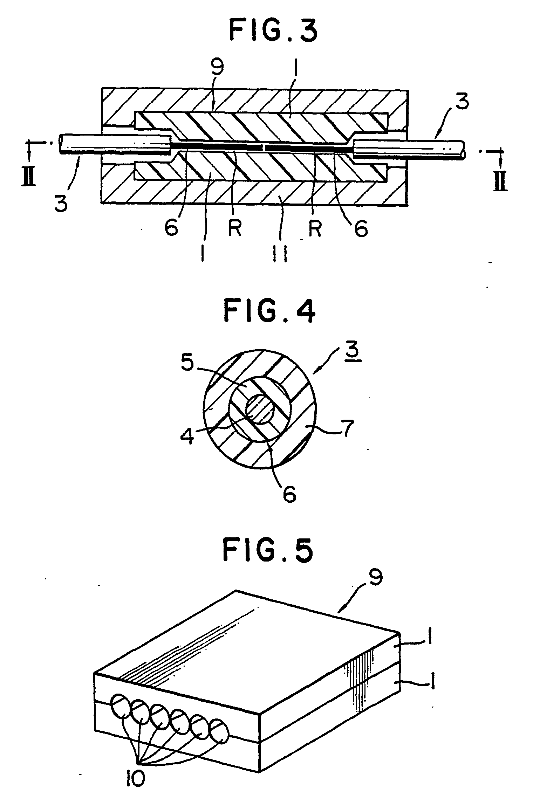

Referring first to Fig. 1, a reference numeral 1 denotes a plastic housing half. Six grooves 2 each having two different semicircular cross-sections are formed in one surface of the housing half 1. Figs. 2 and 3 show the construction of an embodiment of the connector employing a pair of housing halves 1, 1. An optical cable 3 generally includes an optical fibre 6 consisting of a core portion 4 and a cladding 5 concentrically enclosing the core portion 4, and a sheath 7 enclosing the optical fibre 6 for protecting thereof (see Fig. 4). The sheath 7 is removed from the optical cable 3 at its connecting end portion which is to be mirror-cut or polished. A pair of housing halves 1, 1 are bonded to each other to form a housing 9 provided with six receiving bores 10

(see Fig. 5). The exposed optical fibre 6 is coated with a transparent epoxy bonding agent R having a coefficient of viscosity not larger than 20 poise and an index of refraction between 1.4 and 1.5. Then, each optical cable 3 is inserted into the respective bores 10. A similar bonding agent is employed for bonding the pair of housing halves 1, 1. A pair of optical fibres to be connected to each other are secured to each other after their axes are aligned with each other in the bore 10. It is to be noted that a reference numeral 11 designates a casing for housing the connector housing 9. In the case of the above-described embodiment, a pair of optical fibres are permanently connected.

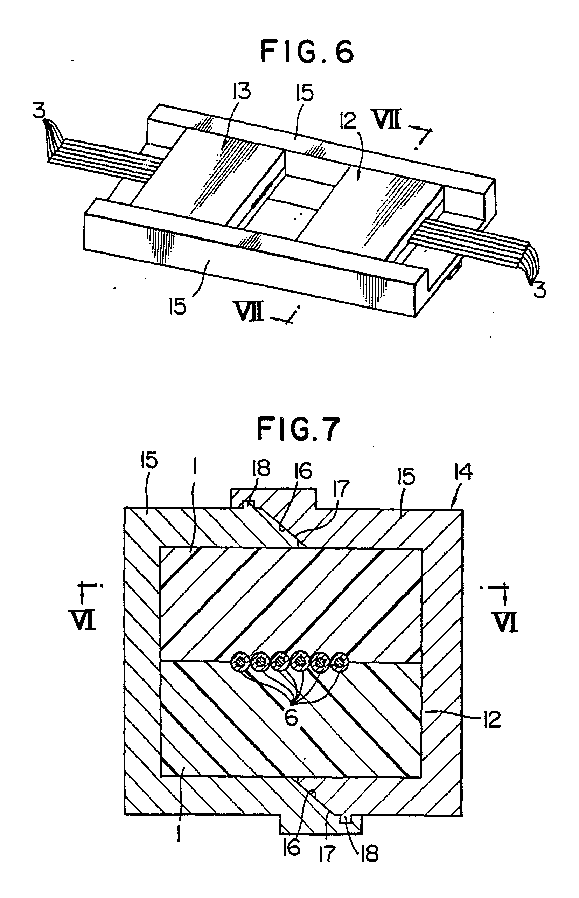

Another connector will be described referring to Figs. 6 and 7, which makes it possible to detachably connect a pair of optical fibres to each other. As in the first-mentioned connector, a pair of connector housing halves 1, 1 are bonded to each other to provide a first housing 12 having six through bores 10. The optical fibre 6 of each optical cable 3 is inserted into the associated bore 10 and secured therein by means of a bonding agent. Moreover, a second housing 13 is provided in a similar manner. The end surface of each housing 12 and 13 and the optical fibres are polished together by an end polishing device (not shown) in a direction perpendicular to the axes of the optical fibres. Both housings 12 and 13 are inserted into a casing 14 so that the polished end surfaces face each other. The polished end surfaces are detachably abutted to each other to form a connection between a plurality of optical fibres. The casing 14 is constituted by a pair of C channel members 15 one of which has a recess 16 for complementally engaging with a slanted surface 17 and a projection 18 formed on the other C channel member 15. Through the engagement between each recess 16 and the corresponding slanted surface 17 and projection 18, the casing 14 is formed to firmly secure a pair of housings 12, 13.

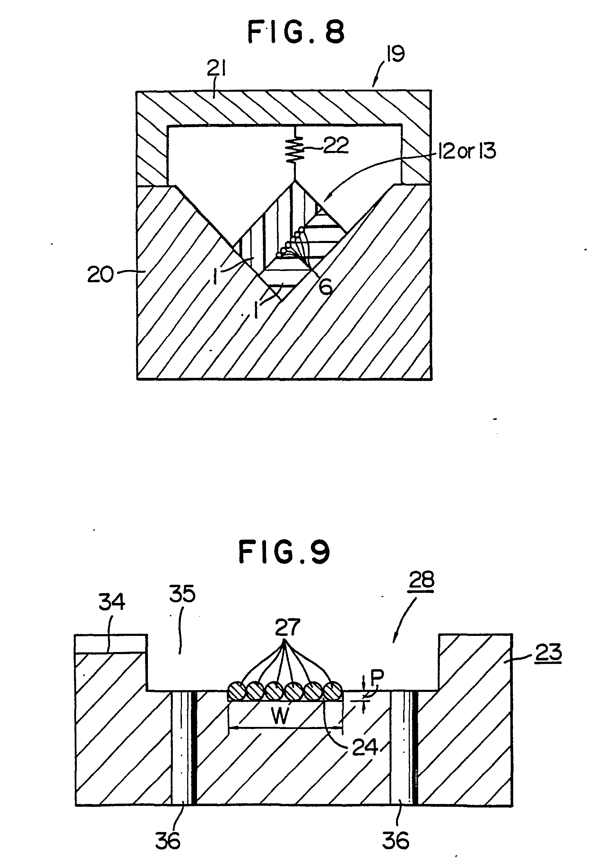

An embodiment of another detachable connector means will be described hereinunder with reference to Fig. 8. In this embodiment, in place of the casing 14, a casing 19 is employed, which includes a base having a groove of V-shaped cross-section and a press frame 21. The housings 12 and 13 are pressed against the groove by a spring 22 attached to the press frame 21. The housings 12 and 13 are brought into contact with each other by moving the press frame 21. In this way, the housings are positioned stably and highly accurately.

It is also possible that after the sheath 7 on one portion of each optical cable 3 is removed to expose an optical fibre 6 which is secured by means of a bonding agent in a housing 9 which holds the exposed optical fibre between a pair of housing halves 1 and 1, the housing 9 can be cut into two at a central portion thereof in a direction perpendicular to the axes of the optical fibres. The cut surfaces are then polished for use.

In this case, only two housing halves are employed, although four housing halves are used in the first two embodiments.

The manufacture of the housing half 1 will be described hereinunder with reference to Figs. 9 to 12.

In case that an outer diameter of each of optical fibres to be connected is D μm, an outer diameter of each of optical cables is LD μm and the number of the optical fibres is $n$, a groove 24 having a width $W = (n \times LD + n \times a)$ μm and a depth $P = (LD + a)/2$ μm is formed in the opposite end portions of a mold 23 and a series of six grooves 24' each having a width $w = (D + a)$ μm and a depth $p = (D + a)/2$ μm is formed in a central portion of the mold 23 so as to communicate with the grooves 24 and 24 to form a mold cavity half for columnar masters 27. A retainer plate 25 is also provided with a groove 26 having the same configuration as that of the groove 24. It is to be noted that the symbol $a$ represents a constant determined according to the mold shrinkage factor of a plastic employed. The metal columnar masters 27 each of which has enlarged end portions are disposed in the mold cavity half, and the retainer plate 25 is fitted in the mold 23, so that a cavity core 28 is extremely easily constituted. It is to be noted that although the columnar masters 27 and the groove 24 can be machined with an accuracy on the order of 0.2 to 0.5 μm by the conventional machining technique, the diameter of the columnar masters 27 may be 1 to several μm larger than the outer diameter D of optical fibre in consideration of the mold shrinkage of a plastic material.

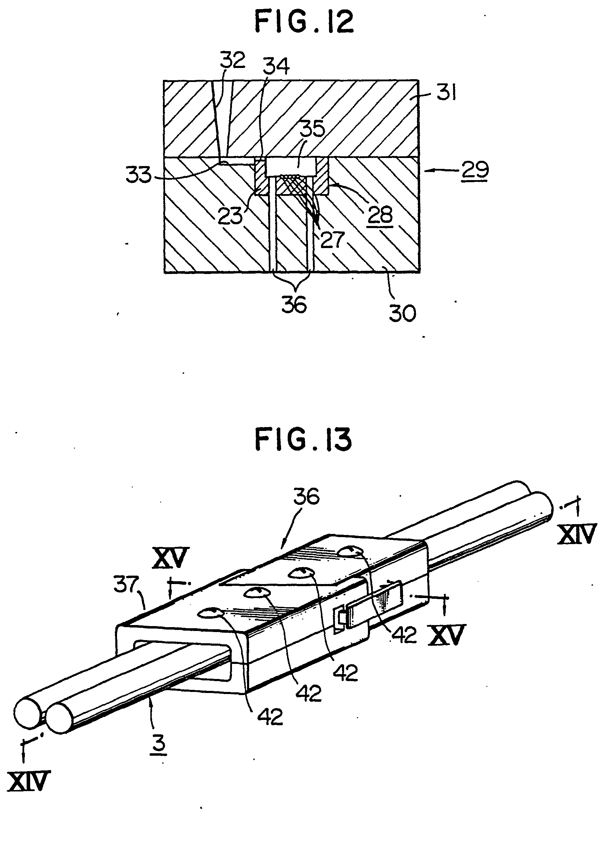

Fig. 12 shows a mold 29 having the cavity core 28 as an inner mold. The mold 29 is constituted by a lower half 30 having the cavity core 28 as an inner mold and an upper half 31. The mold 29 is clamped by means of a molding machine (not shown) and a plastic material is filled into a cavity 35 through a sprue 32, a runner 33 and a gate 34. After the filled plastic material cools down and hardens, the lower and upper halves 30 and 31 are separated from each other, and the molded housing half 1 in the cavity 35 is pushed out of the mold 29 by means of ejector pins 36. In this case, if an epoxy resin or phenolic resin mixed with quarts powder, glass fibre, carbon fibre or the like as a filler is employed as the plastic material, the accuracy of the column masters 27 can be transferred virtually exactly.

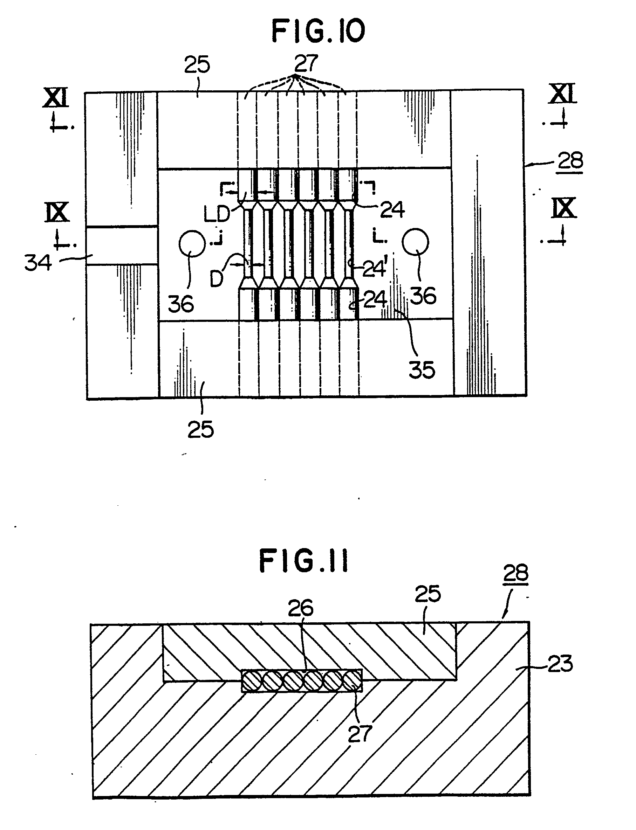

In the case where optical cables are permanently connected to each other as shown in Fig. 2, both end portions of the grooves in the housing half 1 are required to have a diameter larger than that of the sheathings of the optical cables so that the sheathings can be housed therein. Therefore, both end portions of each master 27 are required to have a diameter slightly larger than that of the sheathing as shown in Fig. 10. However, in the case where optical cables are detachably connected to each other as shown in Fig. 13, since only one end portion of each of the grooves in the housing half 1 is required to have a diameter larger than that of the sheathing so that it can be housed, only one end portion of each master 27 is required to have a diameter slightly larger than that of the sheathing.

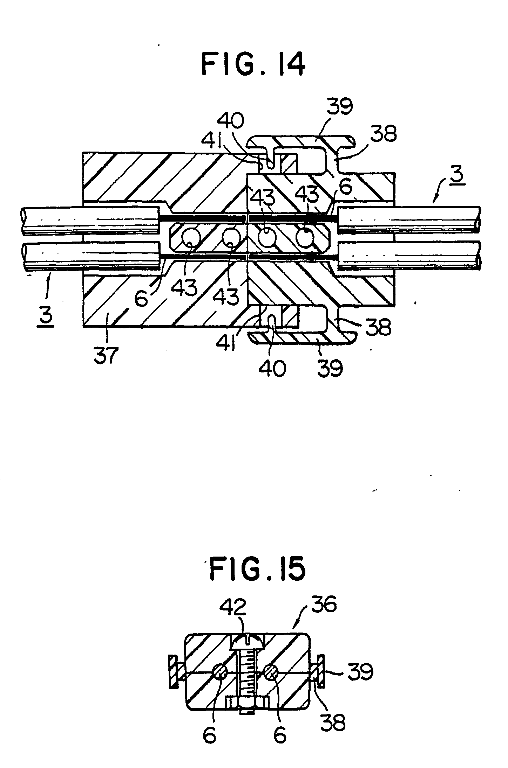

Figs. 13 to 15 show an embodiment of still another detachable connector means. In this embodiment, housings 36 and 37 themselves are provided with engaging means without employing the casings 14 and 19. More specifically, one housing 36 has a pair of arms 39 with hooks 40 connected to both sides thereof by projections 38 having elasticity. The other housing 37 is provided on both sides thereof with recesses 41 for engaging the hooks 40 thereby to connect both the housings 36 and 37. Each housing is assembled by tightening a pair of housing halves by means of screws 42 and 42. In the drawing, a reference numeral 43 denotes each of bores for receiving the screws 42, respectively.

As has been described according to the invention, a flat type connector means can be manufactured with high efficiency and accuracy as well as a low cost by the plastics molding using a mold. In addition, since a plastic material mixed with quartz powder, glass fibre, carbon fibre or the like as a filler is employed to make the linear expansion coefficient smaller, it is possible to reduce the dimentional change due to temperature change. Accordingly, it is possible to provide an optical connector having a lower splicing loss as well as an excellent reliability.

## Claim

A method of injection molding a flat type plastic connector means (1) for splicing a plurality of exposed optical fibres (6), comprising the following steps:

arranging a plurality of columnar masters (27) on a mold (23), each master being provided with an intermediate, smaller diameter portion, at one or both ends thereof, with a larger diameter portion, the mold being shaped such that the plurality of columnar masters are arranged parallel to one another with the larger diameter portions, at said one or both ends, being maintained laterally contiguous with one another in a corresponding groove (24) located at an end portion of the mold (23) and the mold being further shaped such that the smaller diameter portions of the masters (27) are disposed in a series of corresponding spaced grooves (24') in the mold (23); and

injecting a thermosetting resin into the mold (23) whereby a plastic connector means (1) is formed by molding, one surface of which has a plurality of larger semi-circular grooves (2) corresponding to the larger diameter portions of the masters (27) for receiving the optical cables (3) and a plurality of smaller semi-circular grooves corresponding to the smaller diameter portions of the masters (27) for receiving the exposed optical fibres (6).

## Patentanspruch

Verfahren zum Spritzgießen einer flachen Kunststoffverbindungseinrichtung (1) zum Verbinden einer Vielzahl von optischen Fasern mit folgenden Schritten:

Anordnen einer Vielzahl von säulenförmigen Bezugsformstücken (27) auf einer Form (23), wobei jedes Bezugsformstück mit einem Zwischenabschnitt kleineren Durchmessers und an einem oder beiden Enden mit einem Abschnitt größeren Durchmessers versehen ist, und wobei die Form derart geformt ist, daß die Vielzahl von säulenförmigen Bezugsformstücken parallel zueinander angeordnet sind, wobei die Abschnitte größeren Durchmessers an dem einen Ende oder an beiden Enden seitlich angrenzend aneinander in einer entsprechenden Nut (24) gehalten werden, welche an einem Endabschnitt der Form (23) angeordnet ist, und wobei die Form weiter derart geformt ist, daß die Abschnitte kleineren Durchmessers der Bezugsformstücke (27) in einer Reihe von entsprechenden beabstandeten Nuten (24') in der Form (23) angeordnet sind; und

Einspritzen eines hitzehärtbaren Kunststoffes in die Form (23), wobei eine Kunststoffverbindungseinrichtung (1) durch Formung gebildet wird, deren eine Oberfläche eine Vielzahl von größeren halbkreisförmigen Nuten (2) entsprechend den Abschnitten größeren Durchmessers der Bezugsformstücke (27) zur Aufnahme der optischen Kabel (3) und eine Vielzahl von kleineren halbkreisförmigen Nuten entsprechend den Abschnitten kleineren Durchmessers der Bezugsformstücke (27) zur Aufnahme der freiliegenden optischen Fasern (6) aufweist.

## Revendication

Procédé de moulage par injection de moyens (1) formant connecteur plat en matière plastique, pour raccorder une pluralité de fibres optiques nues (6), incluant les étapes suivantes:

on dispose une pluralité de gabarits en forme de colonnes (27) sur un moule (23), chaque gabarit comportant une partie intermédiaire de plus petit diamètre et, au niveau d'une ou de ses deux extrémités, une partie de plus grand diamètre, le moule étant conformé de telle sorte que la pluralité de gabarits en forme de colonnes sont disposés parallèlement les uns aux autres, les parties de plus grand diamètre au niveau de la ou desdites deux extrémités étant maintenues latéralement dans des positions contiguës les unes aux autres dans une gorge correspondante (24) située dans une partie d'extrémité du moule (23), et le moule étant en outre conformé de manière que les parties de plus petit diamètre des gabarits (27) sont disposées dans une série de gorges espacées correspondantes (24') ménagées dans le moule (23); et

on injecte une résine thermodurcissable dans le moule (23) de manière à former par moulage des moyens (1) en matière plastique formant connec-

teur, dont une surface possède une pluralité de gorges semicirculaires plus larges (2) correspondant aux parties de plus grand diamètre des gabarits (27) afin de recevoir des câbles optiques (3), et une pluralité de gorges semicirculaires plus petites correspondant aux parties de plus petit diamètre des gabarits (27) servant à recevoir les fibres optiques nues (6).

# FIG. 1

# FIG. 2

# FIG.3

# FIG.4

# FIG.5

# FIG.6

# FIG.7

3

# FIG. 8

# FIG.9

# FIG.10

# FIG.11

# FIG. 12

32 34

31

35

33

29

23

28

27

36

30

# FIG. 13

36

XV

XIV

37

42

XV

42

42

XV

42

XIV

42

42

3

XIV

# FIG. 14

# FIG. 15